# EUROPÄISCHE PATENTSCHRIFT

(11) **EP 1 188 146 B1**
(45) Veröffentlichungstag und Bekanntmachung des Hinweises auf die Patenterteilung: **11.05.2005**
(21) Anmeldenummer: 00929230.1
(22) Anmeldetag: 17.03.2000
(51) Int. Cl.: G06K 19/077, H03K 17/955

(54) **CHIPKARTE**
CHIP CARD
CARTE A PUCE

(30) Priorität: 31.03.1999 DE 19914587
(43) Veröffentlichungstag der Anmeldung: 20.03.2002
(73) Patentinhaber: Orga Kartensysteme GmbH, 33104 Paderborn (DE); Wendisch, Karl-Heinz, 33154 Salzkotten (DE)
(72) Erfinder: WENDISCH, Karl-Heinz, D-33154 Salzkotten (DE); FANNASCH, Lothar, D-33647 Bielefeld (DE)
(86) Internationale Anmeldenummer: PCT/DE2000/000841
(87) Internationale Veröffentlichungsnummer: WO 2000/060537

(56) Entgegenhaltungen:
- EP-A- 0 557 934
- EP-A- 0 831 420
- EP-A- 0 843 509
- GB-A- 1 600 556
- US-A- 4 263 659
- US-A- 5 438 175

## Beschreibung

Die Erfindung betrifft eine Chipkarte mit einem Chipkartenkörper, mindestens einer Vorrichtung zur kontaktbehafteten oder kontaktlosen Datenübertragung, einer Energieversorgungsquelle, einem integrierten Halbleiterbaustein und mindestens einem Schaltelement.

Chipkarten werden in zunehmenden Maße in allen Bereichen des täglichen Lebens, beispielsweise in Form von Telefonkarten, Zugangsberechtigungskarten, für Mobilfunktelefone, Bankkarten usw. eingesetzt. Bei diesen Karten erfolgt der Datenaustausch der Chipkarte mit externen Geräten mit Hilfe einer Datenübertragungsvorrichtung, die kontaktbehaftet über einen Berührungskontakt zwischen auf der Karte angeordneten, metallischen Kontaktflächen und korrespondierenden Kontaktflächen in den entsprechenden Geräten oder kontaktlos durch eine induktive Übertragung mit Hilfe von innerhalb der Chipkarten angeordneten Spulen durchgeführt wird. Unter der vielfältigen Zahl unterschiedlicher Chipkarten sind auch solche bekannt, die entsprechend dem Gattungsbegriff neben der Datenübertragungsvorrichtung eine Energieversorgungsquelle und mindestens ein Schaltelement aufweisen, mit deren Hilfe die Chipkarte interaktiv genutzt werden kann. Bei diesen Schaltelementen handelt es sich um spezielle Konstruktionen, die aufgrund der genormten geringen Dicke üblicher Chipkarten einen überaus komplizierten, herstellungstechnisch aufwendigen und in ihrer Funktionszuverlässigkeit wenig zufriedenstellenden Aufbau aufweisen.

Eine solche gattungsgemäße Chipkarte wird z. B. in der EP-A-0557 934 beschrieben. Hier besteht das Schaltelement aus einem Schalter, z. B. aus einem Kippschalter. In der GB-A-1 600 556 werden verschiedene Arten von Schaltelementen beshrieben, die keine beweglichen Teile besitzen und auf leitenden, induktiven, kapazitiven oder anderen physikalischen Eigenschaften beruhen. Offenbart werde hier Schaltelemente, die ein elektromagnetische Strahlung aussendendes und ein auf diese Strahlung empfindliches Element besitzen.

Aufgabe der vorliegenden Erfindung ist es, eine Chipkarte der gattungsbildenden Art zu schaffen, die eine interaktive Benutzung erlaubt und Schaltelemente aufweist, die nicht die oben beschriebenen Nachteile aufweisen, sondern sich einfach und kostengünstig herstellen lassen und unter allen betrieblichen Rahmenbedingungen bei hoher Lebensdauer zuverlässig funktionieren.

Diese Aufgabe wird erfindungsgemäß dadurch gelöst, daß das Schaltelement der Chipkarte ein kapazitiver Sensorschalter mit einer ersten innerhalb des Chipkartenkörpers liegenden Metallschichtfläche, einer zweiten an der äußeren Oberfläche des Chipkartenkörpers über der ersten innenliegenden Metallschichtfläche angeordneten Metallschichtfläche und mindestens einer weiteren an der äußeren Oberfläche des Chipkartenkörpers liegenden metallischen Referenzkontaktfläche ist, wobei die Referenzkontaktfläche und die erste Metallschichtfläche über eine Auswerteschaltung mit jeweils einem Pol der Energieversorgungsquelle verbunden sind.

Durch diese spezielle erfindungsgemäße Gestaltung ergibt sich die Möglichkeit, über die Chipkarte benutzerdefinierte Informationen beispielsweise mit Hilfe einer Tastatur ohne Bewegung mechanischer Elemente verschleißfrei an ein Empfangsgerät weiterzugeben. Die für den kapazitiven Sensorschalter notwendigen Metallschichtflächen lassen sich auf einfachste Weise mit Hilfe bekannter Technologien innerhalb des Chipkartenkörpers und an dessen Oberfläche anbringen, so daß gegenüber den aus dem Stand der Technik bekannten Chipkarten wesentliche Preisvorteile entstehen. Dies ergibt sich schon aus der Tatsache, daß keine Montage einzelner beweglicher Teile herkömmlicher Schaltelemente wie Federn. Kontaktflächen und dergleichen notwendig ist. Darüber hinaus besitzt die erfindungsgemäße Chipkarte den Vorteil, daß die neuartigen Schaltelemente keinerlei Querschnittschwächung durch Einschnitte oder Ausfräsungen benötigen, die ansonsten aufgrund der geringen Dicke der Chipkarten u. U. die Robustheit der Chipkarten stark beeinträchtigen.

Durch die erfindungsgemäße Gestaltung wird durch die beiden sich gegenüberliegenden Metallschichtflächen innerhalb des Kartenkörpers und an seiner Oberfläche ein Kondensator aufgebaut. Eine Veränderung der Ladung des Kondensators kann über die Auswerteschaltung ermittelt und als Tastendruck ausgewertet und verarbeitet werden. Die Veränderung der Ladung des Kondensators erfolgt dadurch, daß durch den Benutzer eine Verbindung zwischen der ebenfalls an der Außenseite liegenden Referenzkontaktfläche und der äußeren Metallschichtfläche hergestellt wird. Durch die Berührung der äußeren Metallschichtfläche, beispielsweise mit Hilfe eines Fingers wird die Ladung des Kondensators verändert und so durch die Auswerteschaltung ein Tastendruck des Benutzers erkannt. Da eine Ladungsveränderung
des Kondensators nur durch die elektrische Verbindung zwischen Referenzkontaktfläche und äußerer Metallschichtfläche mit Hilfe des Benutzers vorgenommen werden kann, sind irrtümliche Tastendrücke durch Berührungen der äußeren Metallschichtfläche ausgeschlossen.

Spezielle Ausgestaltungen des Gegenstandes der Erfindung ergeben sich zusammen mit der erfindungsgemäßen Lehre des Anspruches 1 aus den Merkmalen der abhängigen Unteransprüche 1 bis 10.

Zweckmäßig ist vor allem, die Auswerteschaltung in den bereits vorhandenen integrierten Halbleiterbaustein zu integrieren, da dies eine besonders kostengünstige Funktionsintegration darstellt.

Es hat sich darüberhinaus insbesondere als vorteilhaft erwiesen, die Referenzkontaktfläche an mindestens einer der Kantenflächen des Chipkartenkörpers anzuordnen. Durch diese Anordnung wird gewährleistet, daß aufgrund der Handhabung beim Halten und Betätigen der erfindungsgemäßen Chipkarte eine automatische Berührung der Referenzkontaktfläche herbeigeführt wird. Zusätzlich kann es vorteilhaft sein, die Referenzkontaktfläche an zwei oder drei Kantenflächen der Chipkarte anzuordnen.

Versieht man entsprechend einer weiteren zweckmäßigen Ausgestaltung des Gegenstandes der Erfindung den integrierten Halbleiterbaustein mit einer Lernfähigkeitslogik, so kann die Chipkarte in ihrer funktion individuell an den jeweiligen Chipkartenbenutzer angepaßt werden. Beispielsweise läßt sich mit Hilfe der Lernfähigkeitslogik bei einer allerersten Benutzung der Chipkarte bzw. des kapazitiven Sensorschalters ein Sensorwert für die Betätigung des Schaltelementes festlegen, der nachfolgend eine zuverlässige Benutzung des Sensorschalters sicherstellt.

Desweiteren kann entsprechend einer vorteilhaften Ausgestaltung die zweite an der äußeren Oberfläche des Chipkartenkörpers über der ersten innenliegenden Metallschichtfläche angeordnete Metallschichtfläche eine Teilfläche der Vorrichtung zur kontaktbehafteten Datenübertragung sein. Die Vorrichtung zur kontaktbehafteten Datenübertragung besteht üblicherweise aus mehreren einzelnen Kontaktflächen an der Außenseite des Chipkartenkörpers. Da unter bestimmten Randbedingungen eine oder mehrere dieser einzelnen Kontaktflächen für die Datenübertragung nicht genutzt werden, bietet die Verwendung einer derartigen Kontaktfläche der Datenübertragungsvorrichtung als äußere Metallschichtfläche des kapazitiven Sensorschalters den Vorteil, daß keine gesonderte Kontaktfläche an der Außenseite des Chipkartenkörpers bereitgestellt werden muß, was eine Einsparung von Produktionskosten bewirkt. Gleiches gilt für die besondere Ausgestaltung, bei der die weitere an der äußeren Oberfläche des Chipkartenkörpers liegende metallische Referenzkontaktfläche ebenfalls eine Teilfläche der Vorrichtung zur kontaktbehafteten Datenübertragung ist.

Die Herstellung der äußeren Metallschichtfläche aus Palladium mit einer Schichtdicke von 2 - 4 µm gewährleistet zum einen eine lange Lebensdauer der Metallschichtfläche ohne Abnutzung und Oxidation, darüber hinaus ergibt die o. a. geringe Schichtdicke eine äußerst ebene Außenoberfläche der Chipkarte.

Ist die innerhalb des Chipkörpers liegende Metallschichtfläche aus Kupfer hergestellt, ermöglicht dies niedrige Produktionskosten, wobei sich für die innenliegende Metallschichtfläche eine Schichtdicke von 30 - 40 µm und vorzugsweise 35 µm als besonders vorteilhaft für Herstellung und Funktion herausgestellt hat.

Im folgenden werden die erfindungsgemäßen Lösungen anhand von zwei Ausgestaltungen des Gegenstandes der Erfindung näher erläutert. Es zeigt:
- Figur 1: eine schematische Darstellung der erfindungsgemäßen Chipkarte gemäß Anspruch 1,
- Figur 2: eine Schaltbilddarstellung der Bauteile der erfindungsgemäßen Chipkarte aus Figur 1,
- Figur 3: einen Teilquerschnitt der erfindungsgemäßen Chipkarte nach Anspruch 1 entsprechend der Linie B-B aus Figur 1,
- Figur 4: eine Draufsicht auf ein Ausführungsbeispiel der Chipkarte gemäß Anspruch 1,
- Figur 5: eine Schnittdarstellung durch eine weitere Ausführungsform der erfindungsgemäßen Chipkarte im Bereich der Datenübertragungsvorrichtung und

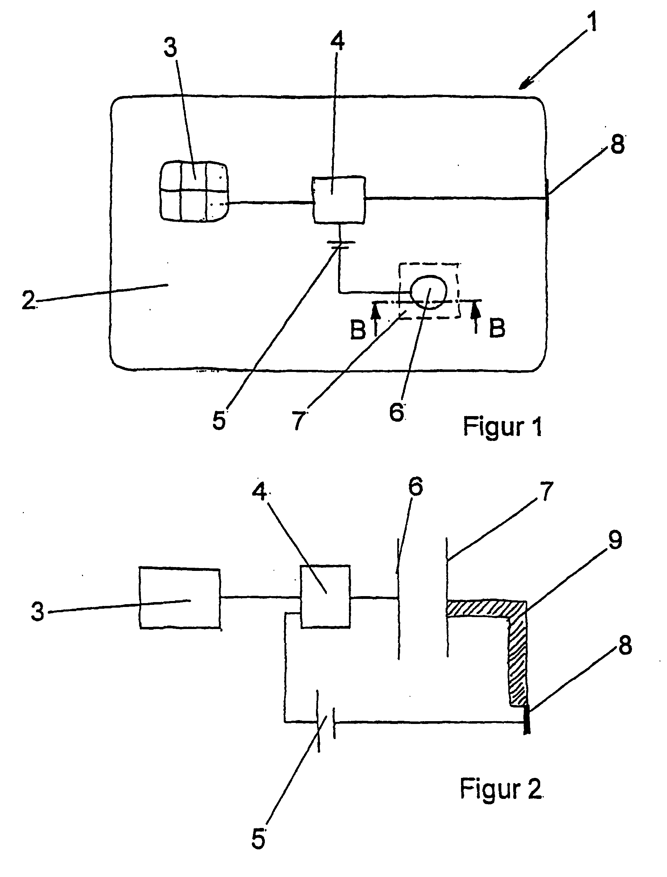

Die in Ihrer Gesamtheit mit 1 bezeichnete Chipkarte in Figur 1 weist im wesentlichen einen rechteckigen Chipkartenkörper 2, eine Datenübertragungsvorrichtung 3, einen integrierten Halbleiterbausteines 4 und eine Energiequelle 5 in Form einer Batterie auf. Erfindungswesentlich sind eine erste innerhalb des Chipkartenkörpers 1 liegende Metallschichtfläche 6, eine außen auf der Oberfläche der Chipkarte 1 angeordnete Metallschichtfläche 7, die in diesem Ausführungsbeispiel im Gegensatz zur Metallschichtfläche 6 quadratisch geschaltet ist und strichpunktiert dargestellt ist, so wie die an einer Kante des Chipkartenkörpers 2 angeordnete Referenzkontaktfläche 8. Die Metallschichtfläche 6 ist mit einem Pol der Energiequelle 5 verbunden. Der andere Pol der Energiequelle 5 ist an eine Auswerteschaltung angeschlossen, die wiederum über eine Verbindung sowohl zur Datenübertragungsvorrichtung 3 als auch zur Referenzkontaktfläche 8 verfügt. Die Auswerteschaltung ist in diesem Ausführungsbeispiel in den integrierter Halbleiterbaustein 4 aufgenommen.

Aus der Figur 2 wird die Zusammenschaltung der verschiedenen Bauelemente der Chipkarte noch einmal deutlich. Die Bezifferung der Bauteile entspricht derjenigen der Figur 1. Die beiden auf der Chipkarte 1 übereinander angeordneten Metallschichtflächen 6 und 7 bilden einen durch die Energiequelle 5 gespeisten Kondensator. Wird durch den Benutzer der Chipkarte eine Verbindung der Referenzkontaktfläche 8 mit der äußeren Metallschichtfläche 7 beispielsweise durch Fingerberührung (durch die schraffierte Fläche schematisch angedeutet) hergestellt, so verändert sich die Ladung des durch die Metallschichtflächen 6 und 7 gebildeten Kondensators. Die Ladungsänderung wird vom integrierten Halbleiterbaustein 4 registriert und als Tastendruck verarbeitet. Die vom Benutzer mit dem Tastendruck ausgelöste Information wird dann durch die Auswerteschaltung in dem integrierten Halbleiterbaustein an die Datenübertragungsvorrichtung 3 weitergeleitet und ggf. an ein externes Terminal übermittelt.

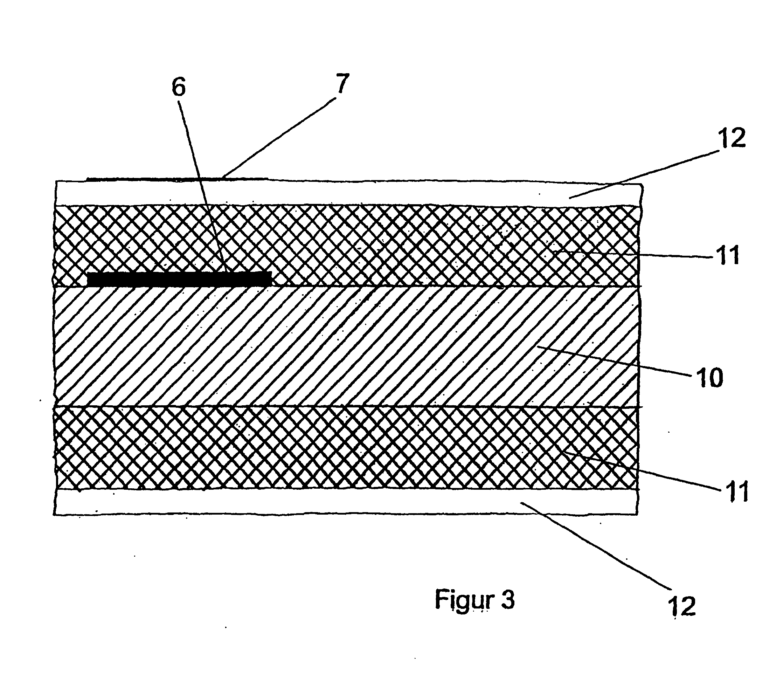

Aus der Figur 3 wird der Querschnittsaufbau mit der Anordnung der beiden Metallschichtflächen 6 und 7 verdeutlicht. Die Chipkarte 1 ist in diesem Ausführungsbeispiel aus fünf einzelnen Schichten aufgebaut. Im einzelnen sind dies die zentrale Mittelschicht 10 mit einer Dicke von 300 µm, auf der Ober- und Unterseite der Mittelschicht 10 aufgebrachte Druckbogen 11 in einer Dicke von 200 µm, sowie als Abdeckung für die Ober- und Unterseite der Chipkarte, die Overlayschichten 12. Aus der Figur 3 wird deutlich, daß auf der zentralen Mittelschicht 10 die ca. 35 µm dicke Metallschichtfläche 6 angeordnet ist. In der gleichen Ebene wie die Metallschichtfläche 6 befinden sich auch die verbindenden Leiterbahnen zu den übrigen Bauelementen der Chipkarte 1. Die Leiterbahnen sowie die Metallschichtfläche 6 werden durch den Druckbogen 11 abgedeckt. Das Material der Druckbögen 11 ist so bemessen, daß im Rahmen des Herstellungsprozesses das Material des Druckbogens 11 die Metallschichtfläche 6 überdeckt, ohne daß an der Außenseite der Druckbogenschicht 11 nach Beendigung des Druckvorganges eine Unebenheit vorhanden ist. An der Außenseite der Overlayschicht 12 befindet sich die ca. 2 - 4 µm dicke, aus Palladium hergestellte Metallschichtfläche 7. Diese Fläche ist so dünn ausgeführt, daß eine nachteilige Erhebung der Metallschichtfläche 7 über das Maß der Außenfläche der Overlayschicht 12 faktisch nicht gegeben.

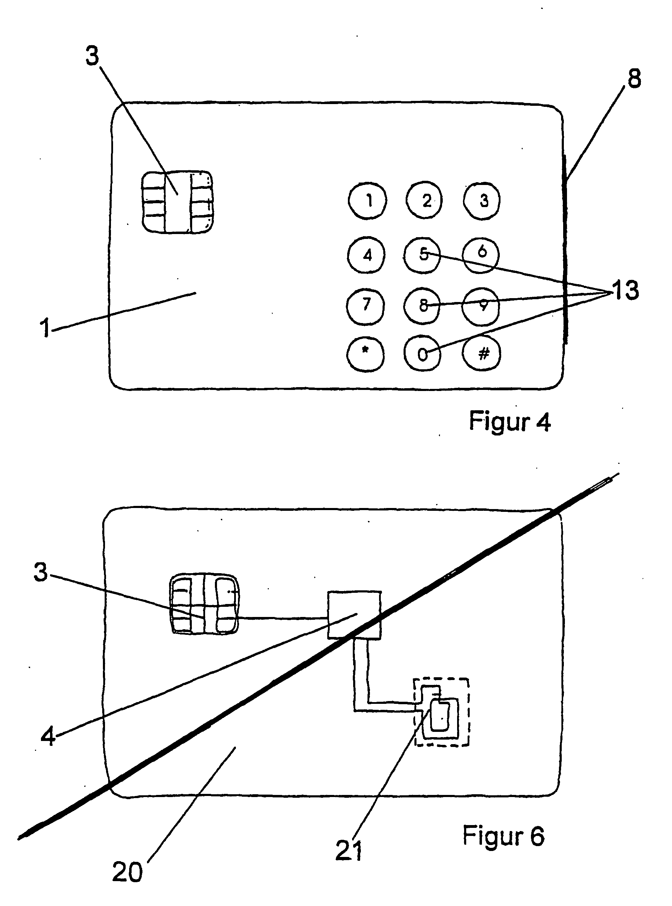

In Figur 4 ist eine Ansicht eines Ausführungsbeispieles dargestellt, in der die bislang beschriebenen erfindungsgemäßen Schaltelemente in Form einer Tastatur mit einzelnen Tastenfeldem 13 angeordnet sind. Mit Hilfe der einzelnen Tastenfelder 13 kann der Benutzer der Chipkarte dem integrierten Halbleiterbaustein Informationen zukommen lassen, die dieser dann verarbeitet und ggf. über die Datenübertragungsvorrichtung 3 anderen ergänzenden Einrichtungen zuleitet. Im übrigen ist aus Figur 4 deutlich zu erkennen, daß auf der einen Schmalseite der Chipkarte die Referenzkontaktfläche 8 angeordnet ist.

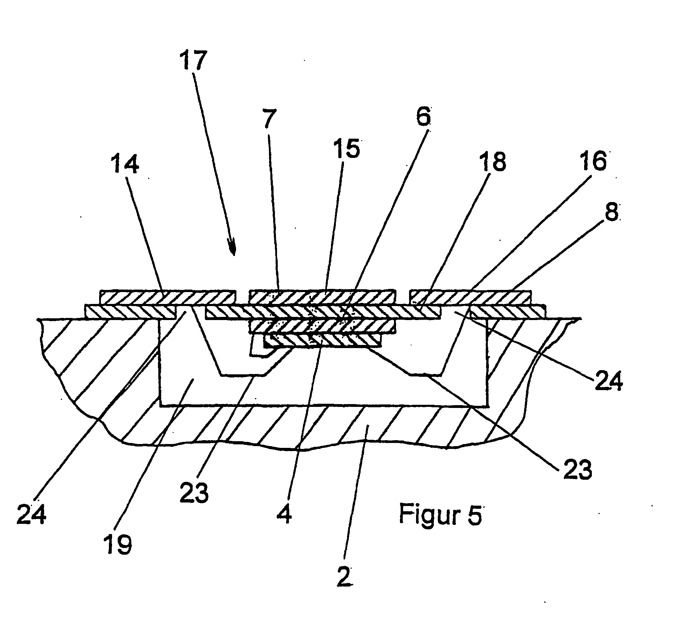

In Figur 5 ist in einer Schnittdarstellung im Bereich der Datenübertragungsvorrichtung eine weitere Ausführungsform der erfindungsgemäßen Chipkarte dargestellt. Der Figur ist zu entnehmen, daß die Vorrichtung zur Datenübertragung 3 an der Außenfläche des Chipkartenkörpers 2 aus mehreren einzelnen Teilflächen 14, 15 und 16 besteht, die Bestandteil eines sogenannten Chipmoduls 17 sind. Das Chipmodul selbst weist darüberhinaus eine Trägerfolie 18 auf, an deren unterer, dem Chipkarteninneren zugewandten Seite der integrierte Halbleiterbaustein 4 in Form eines Chips angeordnet ist. Das gesamte Chipmodul 17 bildet ein seperates Zwischenerzeugnis der Chipkartenproduktion und wird in eine sacklochartige Aussparung 19 des Chipkartenkörpers 2 eingesetzt. Die Teilflächen 14 bis 16 der Datenübertragungsvorrichtung 3 sind mit dem integrierten Halbleiterbaustein durch einzelne Verbindungsdrähte 23 verbunden, die durch Aussparungen 24 in der Trägerfolie 18 hindurchgeführt sind. Die Figur 5 zeigt außerdem, daß zwischen Trägerfolie 18 und dem Halbleiterbaustein 4 in dem dargestellten Ausführungsbeispiel die innenliegende Metallschichtfläche 6 angeordnet ist. Wenn die zweite an der äußeren Oberfläche des Chipkartenkörpers 2 über der ersten innenliegenden Metallschichtfläche 6 angeordnete Metallschichtfläche 7 die Teilfläche 15 der Vorrichtung zur kontaktbehafteten Datenübertragung 3 ist, kann auf diese Weise ebenfalls ein kapazitiver Sensorschalter aufgebaut werden. Da unter bestimmten Randbedingungen eine oder mehrere der einzelnen Kontaktflächen 14, 15 oder 16 für die Datenübertragung nicht genutzt werden, bietet die Verwendung einer dieser Kontaktflächen der Datenübertragungsvorrichtung 3 als äußere Metallschichtfläche 7 des kapazitiven Sensorschalters den Vorteil, daß keine gesonderte Kontaktfläche an der Außenseite des Chipkartenkörpers bereitgestellt werden muß, was eine Einsparung von Produktionskosten bewirkt. Gleiches gilt für die besondere Ausgestaltung, bei der zusätzlich die weitere an der äußeren Oberfläche des Chipkartenkörpers 2 liegende metallische Referenzkontaktfläche 8 ebenfalls die Teilfläche 16 der Vorrichtung zur kontaktbehafteten Datenübertragung 3 ist.

### Bezugszeichenliste

- 1.: Chipkarte
- 2.: Chipkartenkörper
- 3.: Datenübertragungsvorrichtung
- 4.: Integrierter Halbleiterbaustein
- 5.: Energiequelle (Batterie)
- 6.: Metallschichtfläche (innen)
- 7.: Metallschichtfläche (außen)
- 8.: Referenzkontatctfläche
- 9.: Finger
- 10.: Mittelschicht
- 11.: Druckbogen
- 12.: Overlay
- 13.: Tastenfeld
- 14.: Teilfläche
- 15.: Teilfläche
- 16.: Teilfläche
- 17.: Chipmodul
- 18.: Trägerfolie
- 19.: Aussparung
- 20.: Chipkarte
- 21. 23.: Verbindungsdraht
- 24.: Aussparung

## Patentansprüche

1. Chipkarte mit einem Chipkartenkörper, mindestens einer Vorrichtung zur kontaktbehafteten oder kontaktlosen Datenübertragung, einer Energieversorgungsquelle, einem integrierten Halbleiterbaustein (4) und mindestens einem Schaltelement, **dadurch gekennzeichnet, daß** das Schaltelement ein kapazitiver Sensorschalter mit einer ersten innerhalb des Chipkartenkörpers (2) liegenden Metallschichtfläche (6), einer zweiten an der äußeren Oberfläche des Chipkartenkörpers über der ersten innenliegenden Metallschichtfläche (6) angeordneten Metallschichtfläche (7) und mindestens einer weiteren an der äußeren Oberfläche des Chipkartenkörpers (2) liegenden metallischen Referenzkontaktfläche (8) ist, wobei die Referenzkontaktfläche (8) und die erste Metallschichtfläche (6) über eine Auswerteschaltung mit jeweils einem Pol der Energieversorgungsquelle (5) verbunden sind.

2. Chipkarte nach Anspruch 1, **dadurch gekennzeichnet, daß** die Auswerteschaltung innerhalb des integrierten Halbleiterbausteins (4) angeordnet ist.

3. Chipkarte nach Anspruch 1, **dadurch gekennzeichnet, daß** die Referenzkontaktfläche (8) an mindestens einer der Kantenflächen des Chipkartenkörpers (2) angeordnet ist.

4. Chipkarte nach Anspruch 1, **dadurch gekennzeichnet, daß** die Referenzkontaktfläche (8) an der Vorderseite des Chipkartenkörpers (2) angeordnet ist.

5. Chipkarte nach Anspruch 1, **dadurch gekennzeichnet, daß** die Referenzkontaktfläche (8) an der Rückseite des Chipkartenkörpers (2) angeordnet ist.

6. Chipkarte nach Anspruch 1 bis 5, **dadurch gekennzeichnet, daß** die zweite an der äußeren Oberfläche des Chipkartenkörpers über der ersten innenliegenden Metallschichtfläche (6) angeordnete Metallschichtfläche (7) eine Teilfläche (15) der Vorrichtung zur kontaktbehafteten Datenübertragung (3) ist.

7. Chipkarte nach Anspruch 1 , 2 oder 6, **dadurch gekennzeichnet, daß** die weitere an der äußeren Oberfläche des Chipkartenkörpers (2) liegende metallische Referenzkontaktfläche (8) eine Teilfläche (16) der Vorrichtung zur kontaktbehafteten Datenübertragung (3) ist.

8. Chipkarte nach einem der Ansprüche 1 bis 7, **dadurch gekennzeichnet, daß** der Halbleiterbaustein (4) eine Lernfähigkeitslogik aufweist.

9. Chipkarte nach einem der Ansprüche 1 bis 8, **dadurch gekennzeichnet, daß** die äußere Metallschichtfläche (7) aus Palladium besteht und eine Schichtdicke von 2 - 4 µm aufweist.

10. Chipkarte nach einem der Ansprüche 1 bis 9, **dadurch gekennzeichnet, daß** die innenliegende Metallschichtfläche (6) aus Kupfer besteht und eine Schichtdicke von 30 - 50 µm, vorzugsweise 35 µm, aufweist.

## Claims

1. Chip card with a chip card body, at least one device for contact-type or contactless data transmission, an energy supply source, an integrated semiconductor component (4) and at least one switching element, **characterized in that** the switching element is a capacitive sensor switch having a first metal layer surface (6) located within the chip card body (2), a second metal layer surface (7) arranged on the outer surface of the chip card body above the first inner metal layer surface (6), and at least one further metallic reference contact surface (8) located on the outer surface of the chip card body (2), wherein the reference contact surface (8) and the first metal layer surface (6) are connected to respective poles of the energy supply source (5) via an evaluation circuit.

2. Chip card according to Claim 1, **characterized in that** the evaluation circuit is arranged within the integrated semiconductor component (4).

3. Chip card according to Claim 1, **characterized in that** the reference contact surface (8) is arranged on at least one of the edge surfaces of the chip card body (2).

4. Chip card according to Claim 1, **characterized in that** the reference contact surface (8) is arranged on the front of the chip card body (2).

5. Chip card according to Claim 1, **characterized in that** the reference contact surface (8) is arranged on the back of the chip card body (2).

6. Chip card according to one of Claims 1 to 5, **characterized in that** the second metal layer surface (7) arranged on the outer surface of the chip card body above the first inner metal layer surface (6) is a partial area (15) of the device for contact-type data transmission (3).

7. Chip card according to one of Claims 1, 2 or 6, **characterized in that** the further metallic reference contact surface (8) located on the outer surface of the chip card body (2) is a partial area (16) of the device for contact-type data transmission (3).

8. Chip card according to one of Claims 1 to 7, **characterized in that** the semiconductor component (4) has an adaptive logic element.

9. Chip card according to one of Claims 1 to 8. **characterized in that** the outer metal layer surface (7) is composed of palladium and has a layer thickness of 2 to 4 µm.

10. Chip card according to one of Claims 1 to 9, **characterized in that** the inner metal layer surface (6) is composed of copper and has a layer thickness of 30 to 50 µm, preferably 35 µm.

## Revendications

1. Carte à puce avec un corps de carte à puce, au moins un dispositif pour le transfert de données par contact ou sans contact, une source d'alimentation en énergie, un module à semi-conducteur intégré et au moins un élément de commutation, caractërisée en ce que l'élément de commutation est un commutateur capacitif, activé par capteur, avec une première surface consistant en une couche métallique (6), disposée à l'intérieur du corps de carte (2), une deuxième surface consistant en une couche métallique (7), disposée sur la face extérieure du corps de carte, au-dessus de la première surface consistant en une couche métallique (6), et au moins une autre surface de contact de référence métallique (8), disposée sur la face extérieure du corps de carte (2), la surface de contact de référence (8) et la première surface consistant en une couche métallique (6) étant reliées chacune à un pôle de la source d'alimentation en énergie (5), par l'intermédiaire d'un circuit d'exploitation.

2. Carte à puce selon la revendication 1, **caractérisée en ce que** le circuit d'exploitation est disposé à l'intérieur du module à semi-conducteur intégré (4).

3. Carte à puce selon la revendication 1, **caractérisée en ce que** la surface de contact de référence (8) est disposée au moins sur l'une des faces latérales du corps de carte à puce (2).

4. Carte à puce selon la revendication 1, **caractérisée en ce que** la surface de contact de référence (8) est disposée sur la face antérieure du corps de carte à puce (2).

5. Carte à puce selon la revendication 1, **caractérisée en ce que** la surface de contact de référence (8) est disposée au dos du corps de carte à puce (2).

6. Carte à puce selon les revendications 1 à 5, **caractérisée en ce que** la deuxième surface consistant en une couche métallique (7), disposée sur la face extérieure du corps de carte à puce, au-dessus de la première surface consistant en une couche métallique (6), située à l'intérieur, est une surface partielle (15) du dispositif de transfert de données par contact (3).

7. Carte à puce selon la revendication 1, 2 ou 6, **caractérisée en ce que** l'autre surface de contact de référence métallique (8), disposée sur la face extérieure du corps de carte à puce (2), est une surface partielle (16) du dispositif de transfert de données par contact (3).

8. Carte à puce selon l'une des revendications 1 à 7, **caractérisée en ce que** le module à semi-conducteur (4) présente une logique intelligente.

9. Carte à puce selon l'une des revendications 1 à 8, **caractérisée en ce que** la couche métallique extérieure (7) est en palladium et présente une épaisseur de 2 - 4 µm.

10. Carte à puce selon l'une des revendications 1 à 9, **caractérisée en ce que** la couche métallique située à l'intérieur (6) est en cuivre et présente une épaisseur de 30 - 50 µm, préférentiellement de 35 µm.
